# EUROPÄISCHE PATENTSCHRIFT

(11) **EP 1 420 940 B1**
(45) Veröffentlichungstag und Bekanntmachung des Hinweises auf die Patenterteilung: **02.04.2008**
(21) Anmeldenummer: 02767068.6
(22) Anmeldetag: 02.08.2002
(51) Int. Cl.: B29C 70/44, B29C 70/54

(54) **VERFAHREN UND VORRICHTUNG ZUR HERSTELLUNG VON FASERVERSTÄRKTEN BAUTEILEN MITTELS EINES INJEKTIONSVERFAHRENS**
METHOD AND DEVICE FOR PRODUCING FIBER-REINFORCED COMPONENTS BY AN INJECTION METHOD
PROCEDE ET DISPOSITIF POUR FABRIQUER PAR INJECTION DES ELEMENTS RENFORCES PAR DES FIBRES

(30) Priorität: 22.08.2001 DE 10140166
(43) Veröffentlichungstag der Anmeldung: 26.05.2004
(73) Patentinhaber: EADS Deutschland GmbH, 85521 Ottobrunn (DE)
(72) Erfinder: FILSINGER, Jürgen, 74613 Ohringen (DE); LIPPERT, Thomas, 86179 Augsburg (DE); STADLER, Franz, 85113 Böhmfeld (DE); UTECHT, Stefan, 86910 Kaufering (DE)
(86) Internationale Anmeldenummer: PCT/DE2002/002857
(87) Internationale Veröffentlichungsnummer: WO 2003/018297

(56) Entgegenhaltungen:
- EP-A- 1 038 656
- DE-C- 10 013 409

## Beschreibung

Die Erfindung betrifft ein Verfahren zur Herstellung von faserverstärkten Kunststoff-Bauteilen aus trockenen Faserverbundhalbzeugen mittels eines Injektionsverfahrens und einer anschließenden Aushärtung sowie eine Vorrichtung zur Durchführung des Verfahrens.

Ein derartiges Verfahren und eine Vorrichtung ist gemäß den Oberbegriffe der Ansprüche 1, 4 und 5 aus der Patentschrift DE 100 13 409 C1 bekannt, bei dem ein Faserverbund-Halbzeug auf einem Werkzeug aufgebracht wird und zur Bildung eines ersten Raums mittels einer gas-durchlässigen und Matrixmaterial-undurchlässigen Membran überzogen wird, wobei zwischen dem Halbzeug und der Membran eine Fließhilfe angeordnet ist. An dem ersten Raum ist ein zweiter Raum angeordnet, der von der Umgebung mittels einer gas- und Matrixmaterial-undurchlässigen, gegenüber dem Werkzeug abgedichteten Folie abgegrenzt ist. Durch Absaugen von Luft aus dem zweiten Raum wird Matrix-Material aus dem Vorratsbehälter in den evakuierten ersten Raum gesaugt und die Fließhilfe eine Verteilung des Matrixmaterials über der dieser zugewandten Oberfläche des Halbzeugs und ein Eindringen desselben senkrecht in das Halbzeug bewirkt.

In der GB 944,955 ist eine Kammer zwischen einer Form (mould 11) und einer Haube (vacuum bag 11) vorgesehen, die zunächst zur Trocknung dieser Kammer evakuiert wird. Anschließend wird unter Druck Harz eingeführt. Dabei wird nur ein Raum zwischen der Haube und einem trockenen Halbzeug verwendet. Nach der GB 944,955 wird Druck angelegt, um eine Vermischung von Luft mit Matrix-Material zu verhindern.

In der EP 0 525 263 A1 ist ein Herstellungsverfahren und eine Herstellungsvorrichtung zur Herstellung von Faserverbund-Bauteilen unter Verwendung einer Form offenbart, bei dem bzw. bei der verschiedene Schichten von Verteilergeweben (distribution medium) verwendet werden und zur Herstellung des Faserverbund-Bauteils Vakuum angelegt wird.

In der DE 1 993 206 U1 wird ein Kunststoffbehälter zur Aufnahme von Flüssigkeiten beschrieben, auf dessen innerer Wandung Kunststoff oder Metallfaservliese eingelegt sind. Dadurch soll eine verbesserte Wärmeableitung erreicht und elektrische Aufladungen vemieden werden oder die Wandung verstärkt werden. Auch eine Glasfasermatte kann verwendet werden. Diese Schichten oder diese Matte wird nach der DE 1 993 206 U1 in den Behälter lediglich eingelegt. Die Glasfasermatte kann unterhalb des Vliesses in den Kunststoff "eingearbeitet" sein kann. Der Begriff "eingearbeitet" wird in der DE 1 993 206 U1 jedoch nicht konkret ausgeführt.

Die Aufgabe der Erfindung besteht darin, das Verfahren derart weiterzuführen, dass die Verfahrens-Sicherheit und die Qualität des herzustellenden Bauteils erhöht wird.

Eine weitere Aufgabe der Erfindung ist, eine größere Vielfalt an technischen Eigenschaften der herzustellenden Bauteile zu ermöglichen.

Diese Aufgabe wird mit den Merkmalen der unabhängigen Ansprüche gelöst. Weitere Ausführungsformen sind in den Unteransprüchen angegeben.

Die Erfindung wird im folgenden an Hand der beiliegenden Figuren beschrieben, die zeigen:
Fig. 1 einen Schnitt durch eine erste Ausführungsform der erfindungsgemäßen Vorrichtung in schematischer Darstellung, mit der ein erstes erfindungsgemäßes Verfahren durchführbar ist,
Fig. 2 einen Schnitt durch eine zweite Ausführungsform der erfindungsgemäßen Vorrichtung in schematischer Darstellung, mit der ein weiteres erfindungsgemäßes Verfahren durchführbar ist"

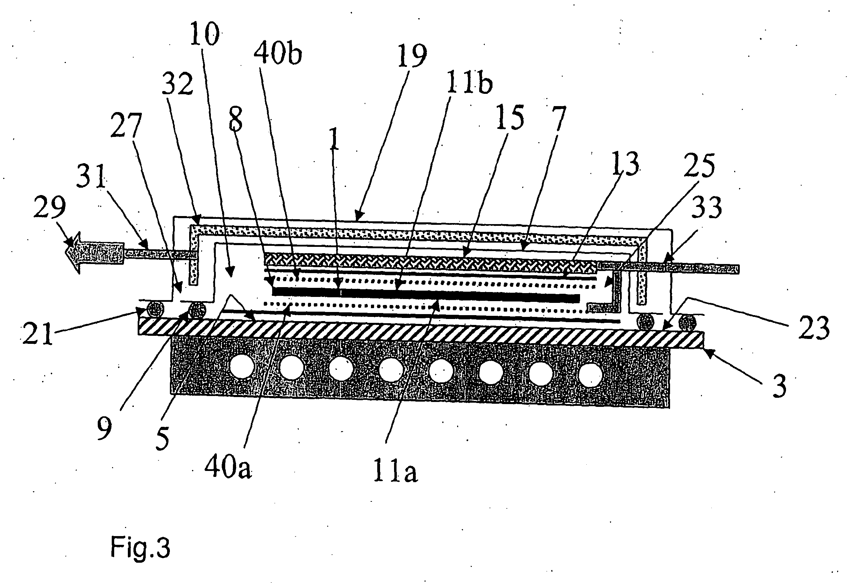

Fig. 3 einen Schnitt durch eine dritte Ausführungsform der erfindungsgemäßen Vorrichtung in schematischer Darstellung, mit der ein weiteres erfindungsgemäßes Verfahren durchführbar ist,
Fig. 4 für ein weiteres erfindungsgemäßes Verfahren typische Verläufe für die Temperatur und das Vakuum in einem ersten Raum um das Halbzeug herum sowie des Autoklaven-Druckes jeweils über die Zeit.

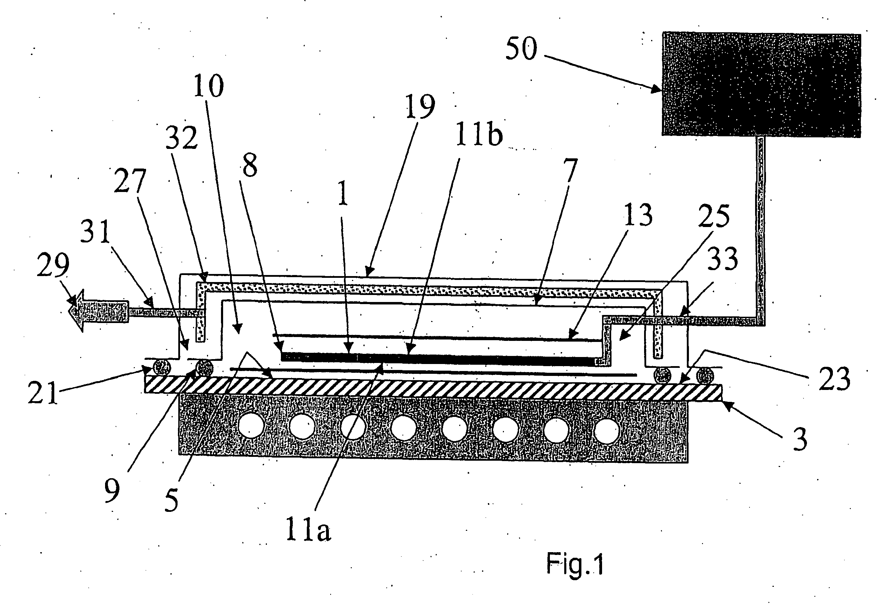

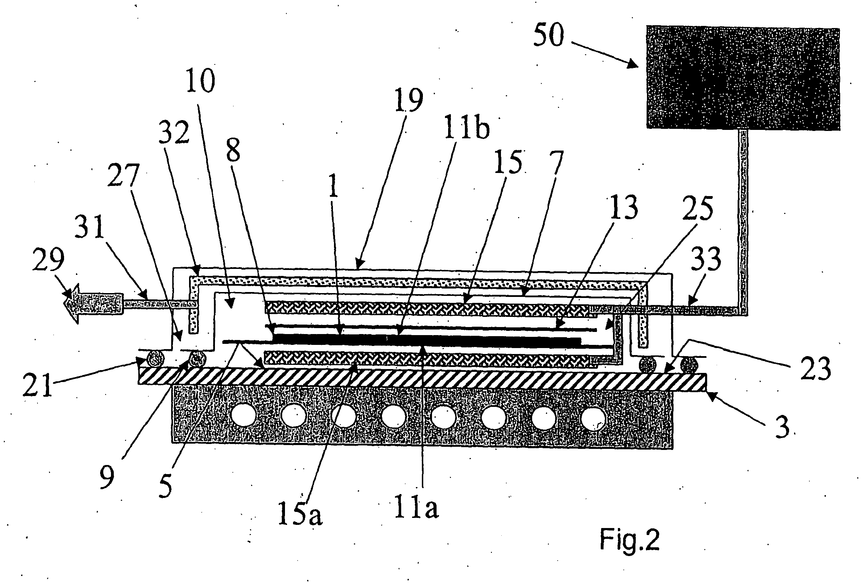

Die in den Figuren 1 und 2 dargestellten Vorrichtungen als Ausführungsformen der Erfindung zeigen das herzustellende Bauteil oder trockene Faserverbund-Halbzeuge 1, das bzw. die auf einem Werkzeug 3 z.B. mittels eines Aufbaus 5 angeordnet ist bzw. sind. Das Bauteil oder Laminat kann dabei ein Kunststoffbauteil aus Kohlefasern (CFK), Glasfasern (GFK), Aramidfasern (AFK), Borfasern (BFK) oder Hybridwerkstoffen mit abwickelbarer, nicht abwickelbarer oder nicht vollständig abwickelbarer Geometrie sein und insbesondere zur Herstellung unversteifter und versteifter, großflächiger Beplankungsfelder, Kunststoffwerkzeugen oder Schäftungsreparaturen von geschädigten FVW-Bauteilen verwendet werden. Die Versteifung kann dabei eine sogenannte Integralversteifung (Profile aus CFK u.a., Profile als Kombination von Sandwich und CFK u.a.) oder eine typische flächenhafte Sandwichstruktur darstellen. Das Werkzeug 2 weist eine zur Aufnahme des Bauteils 1 bzw. gegebenenfalls des Aufbaus 5 geeignete Form auf und kann aus verschiedenen geeigneten Materialien, z.B. Holz, Stahl, Blech, Glas und dergleichen, gebildet sein.

Das Bauteil 1 ist mit einer semipermeablen Membran 7 überzogen, die gasdurchlässig ist, jedoch den Durchtritt von Matrix-Material verhindert. Die Membran 7 ist außerhalb der Umfangsfläche 8 aber möglichst dicht am Bauteil 1 mittels einer Dichtung 9 abgedichtet, die der Abdichtung des durch die Membran 7 und der Auflage 5 bzw. der Werkzeugoberfläche 3 gebildeten ersten Raums 10 dient. Alternativ kann die Membran 7 auch um das gesamte Bauteil herumgeführt sein. Dies kann mit der Dichtung 9 oder auch ohne einer solchen durch einteiliges Ausbilden der Membran 7 erfolgen. Zwischen dem Bauteil 1 und der Membran 7 kann über der gesamten der Membran 7 zugewandten Oberfläche 11 des Bauteils 1 ein Abreißgewebe 13 (optional) und eine Fließhilfe 15, 15a (Fig. 2) angeordnet sein, die die Funktion hat, die Matrix-Material zu verteilen und die Membran 7 in einem Abstand zur Oberfläche 11 des Bauteils 1 zu halten. Die Fließhilfe 15a kann eine Art Rost oder Gitter oder auch ein steifes Gewebe bzw. Gewirk oder Geflecht sein, welches sich nicht unter Vakuum stark kompaktieren lässt und z.B. aus den Werkstoffen Metall, Kunststoffen oder textilen Halbzeugen besteht.

Die Anordnung 17 aus Aufbau 5, Bauteil 1, Membran 7 mit Dichtung 9 sowie gegebenenfalls mit dem Abreißgewebe 13 und der Fließhilfe 15, 15a ist überdeckt mit einer Folie 19, die gas-undurchlässig ist. Diese ist um den Umfang der Membran 7 herum mit einer Dichtung 21 auf dem Werkzeug 3 abgedichtet, so dass der von der Oberfläche 23 des Werkzeugs 3 und der Innenwand 25 der Folie 19 gebildete zweite Raum oder Innenraum 27 zur Umgebung dicht ist. Zwischen der Folie 19 und der Membran 7 kann ein Lüftergewebe 32 eingelegt sein, welches z.B. ein Glasgewebe ein Vlies o.a. sein kann. Dieses Lüftergewebe 32 hat gegebenenfalls die Funktion die durch die Membran aus dem Innenraum 27 abgesaugte Luft und Gase im Innenraum 25 entlang der Membranoberfläche zur Absaugung durch die Vakuumpumpe 29 zu leiten. Dieser Innenraum 27 ist mittels einer Vakuum-Pumpe 29 (nicht gezeigt) und einer entsprechenden in den Innenraum 27 hineinführenden Gasleitung 31 evakuierbar. Weiterhin verläuft in den Innenraum 10 eine zweite Leitung 33, durch die Matrix-Material und insbesondere Harz in den Innenraum 10 eingeführt werden kann.

Zur Einführung von Matrix-Material in das Bauteil 1 führen Schläuche oder Leitungen 33, die an einen Harzvorratsbehälter (nicht gezeigt) angeschlossen sind, in einen im ersten Raum 10 gelegenen Raum 25. Durch Evakuierung des zweiten Raumes 27 wird ein Unterdruck oder Vakuum im ersten Raum 10 erzeugt, wodurch die Enführung von Matrix-Material in den ersten Raum über die Leitung 33 bewirkt wird.

Das Werkzeug und der Vorratsbehälter für das Matrix-Material stehen jeweils entweder auf Heizplatten, innerhalb einer Wärmekammer, innerhalb einer heizbaren Flüssigkeit (Ölbad o.ä.) oder innerhalb eines regelbaren Ofens, sofern das gewählte Harzsystem eine thermische Behandlung während der Injektion benötigt.

In einer Ausführungsform der erfindungsgemäßen Vorrichtung bzw. des erfindungsgemäßen Verfahrens ist ein Drucksteuerungs-Mittel 50 vorgesehen, das den Druck oder auch das Vakuum im Inneren der Leitung 33 oder des Vorratsbehälters für das über diese zuzuführenden Matrix-Materials zumindest zeitweise zu beeinflussen oder zu regeln vermag, um die Einführung des Matrix-Materials zu steuern. Das Drucksteuerungs-Mittel 50 steht mit der Leitung 33 in Verbindung, um den Druck in der Leitung 33 zu beeinflussen. Dabei kann die Einführung des Matrix-Materials bei Erhöhung des Druckes in der Leitung 33 insbesondere zeitweise beschleunigt werden. Durch die Herstellung von Vakuum im Vorratsbehälter des Matrix-Materials kann ein Druckausgleich in dem ersten Raum 10 erreicht werden. Die Herstellung von Vakuum im Vorratsbehälter erfolgt vorzugsweise gegen Ende der Injektionsphase oder erste nach der Injektionsphase, um dadurch einen verbesserten Abzug von Luft aus dem Matrix-Material aufgenommenen Halbzeug zu entziehen. Als Drucksteuerungs-Mittel 50 kommen eine Vakuum-, Hydraulik- oder Pneumatik-Pumpe, eine SchlauchPumpe, Druckluft oder ähnliche technologische Mittel in Betracht. Das Drucksteuerungs-Mittel 50 kann lediglich zur Vakuum-Erzeugung oder lediglich zur Druck-Erzeugung oder zur Erfüllung beider Funktionen vorgesehen sein. In letzterem Fall kann die Vakuum- und die Druck-Erzeugung durch ein und dasselbe Gerät oder zwei verschiedene Geräte realisiert sein.

Durch die Verwendung des Drucksteuerungs-Mittels kann die Verwendung einer Fließhilfe 15a entfallen. Auch kann durch die Steuerung oder Regelung des Vakuums und des Druckes in der Leitung oder des Vorratsbehälters die Qualität des herzustellenden Bauteils 1 beeinflußt werden. Die Erhöhung des Druckes des Matrix-Materials kann dabei aufgrund der Viskosität des Matrix-Materials, einer Temperatur und/oder des Druckes im ersten Raum 10 gesteuert werden. Als Temperatur kann die Temperatur des einfließenden Matrix-Materials oder die Temperatur im ersten Raum 10 verwendet werden.

In einer Ausführungsform der Erfindung ist zwischen dem Halbzeug 1 und dem Werkzeug 3 eine Schicht einer Fließhilfe 15a vorgesehen. Diese Fließhilfe kann auch ohne die Verwendung des Druckerzeugungs-Mittels 50 vorgesehen sein. Durch die Verwendung der Fließhilfe 15a zwischen dem Halbzeug 1 und dem Werkzeug 3 werden Luft-Einschlüsse auf der dem Werkzeug 3 zugewandten Seite 11 a des Halbzeugs beim Einströmen des Matrix-Materials vermieden. Dies erhöht die Prozeß-Sicherheit. Bei dieser Ausführungsform der Erfindung kann die zusätzliche Verwendung des Druckerzeugungs-Mittels 50 insbesondere zur Prozeß-Steuerung vorteilhaft sein.

Neben der Verwendung einer Fließhilfe 15a zwischen dem Halbzeug 1 und dem Werkzeug 3 kann eine weitere Fließhilfe 15 auch auf der dem Werkzeug 3 abgewandten Seite 11 b des Halbzeugs angeordnet sein. Die Fließhilfe 15 auf der dem Werkzeug 3 abgewandten Seite 11b des Halbzeugs nimmt eine Funktion eines Fließkanales an. Die Fließhilfe 15 weist dabei eine Mindestdicke unter dem Vakuumaufbau der Folie 19 auf, um dieses Fließen zu ermöglichen. Es ist somit ein Abstandshalter, der einen Fließkanal zwischen der Membran 7 und dem Bauteil 1 bildet.

Die Fließhilfe 15 hat die Funktion, den in den Raum 25 durch die Matrixzuleitung gelangten Matrixwerkstoff auf der Bauteiloberfläche 1 das Verteilen zu ermöglichen. Die Fließhilfe kann ein Geflecht, ein Gewebe, ein Gewirk o.ä. sein, welches durch möglichst eine grobmaschige Struktur aufweist, um einen geringen Fließwiderstand zu erzeugen. Als Werkstoff können beliebige Werkstoffe aus z.B. Metall oder Kunststoff o.a. verwendet werden, sofern die oben angeführten gemeinsamen Mindestforderungen (Temperatur und Medienbeständigkeit) erreicht werden. Die Matrix-Zuleitung 33 kann zur Unterstützung des Matrixtransportes beliebig weit in den ersten Raum 10 geführt werden. Eine Verzweigung oder mehrere Zuleitungen sind zulässig. Innerhalb des ersten Raums 10 kann diese Matrixzuleitung Öffnungen aufweisen, welche z.B. Löcher, Querschlitze, Längsschlitze o.ä. darstellen. Hierdurch wird der Harztransport in der Fließhilfe unterstützt.

An die Folie 19, an das Abreißgewebe 13, an die Membran 7, an das Lüftergewebe 32 und an die Fließhilfe 15 werden als gemeinsame Anforderung eine Beständigkeit gegen die verwendeten Matrixsysteme während der Prozeßdauer und eine Beständigkeit gegenüber während des Prozesses auftretenden Temperaturen gefordert. Entsprechend der abzubildeten Geometrie muß eine Ablage in dieser Geometrie durch Dehnung, Faltenlegung o.ä. möglich sein.

In einer weiteren Ausführungsform der Erfindung ist zumindest auf einer Oberfläche 11 a, 11 b des Halbzeugs 1 eine metallische oder keramische Schicht 40a, 40b aufgebracht, wobei durch das Absaugen von Luft aus dem zweiten Raum 27 eine Durchdringung des Matrix-Materials durch die Schicht 40a, 40b und ein Eindringen desselben senkrecht in das Halbzeug 1 zur Verbindung mit dem Halbzeug 1 erfolgt. Die metallische oder keramische Schicht (Mesh) 40a, 40b kann als Gewebe, Geflecht oder Gewirke gebildet sein. Als metallische Werkstoffe kommen insbesondere Kupfer, Bronze oder Edelstahl in Betracht.

Die Schicht 40a, 40b ist dazu vorgesehen, daß diese sich unter dem Einfluß des einströmenden Matrix-Materials mit dem Halbzeug verbindet, um dessen MaterialEigenschaften zu beeinflussen. Beispielsweise kann durch die Verwendung eines Kupfer- oder Bronze-Mesh kann die Blitz-ableitende Eigenschaft des herzustellenden Bauteils erreicht und beeinflußt werden. Durch die Verwendung von keramischen Schichten 40a, 40b können die Eigenschaften des herzustellenden Bauteils verbessert werden. Die Verwendung von Edelstahl-Schichten 40a, 40b ermöglicht die Verbesserung von Erosionseigenschaften des herzustellenden Bauteils. Es kann erfindungsgemäß auch eine Kombination der genannten Materialien verwendet werden. Bei Verwendung einer Schicht 40a, 40b kann zusätzlich auf zumindest einer Oberfläche 11a, 11b der Schicht, also auf der dem Werkzeug zugewandten Oberfläche oder der zu dieser entgegengesetzt leigenden Oberfläche eine Fließhilfe 15 angeordnet sein, um eine Verteilung des Matrix-Materials über diese Oberflächen 11a, 11 b und ein Eindringen desselben in das Halbzeug 1 zu bewirken.

Die Folie 19 ist eine dem Stand der Technik entsprechende Vakuum-Membran, welche gas-undurchlässig ist und die oben ausgeführten Merkmale aufweist. Als Funktion hat es die Aufgabe, den zweiten Raum 27 gegenüber der Umgebung abzudichten. Als typische Materialien hierfür kommen Folien oder GummiMembrane in Betracht. Beispiele für eine 180°C (350°F) Anwendung wären z.B. Folien auf Basis PTFE, FEP u.a. Andere Werkstoffe kommen je nach gewählten Matrixsystem und dessen spezifischen Aushärtetemperaturen unter Beachtung der oben beschriebenen Forderung in Betracht.

Das Abreißgewebe 13, in der Literatur auch als Peel Ply bezeichnet, hat die Funktion, daß sich nach der Prozeßführung die mit Matrixmaterial gefüllte Fließhilfe 15 leichter durch abziehen (abreißen=Abreißgewebe). d.h. von dem Bauteil 1 trennen läßt, da alle aufgezeigten Hilfsstoffe nur als Hilfsmittel zur Herstellung des Bauteils 1 dienen. Das Abreißgewebe 13 ist so beschaffen, daß es keine dauerhafte Verbindung mit dem Matrixwerkstoff und der Bauteiloberfläche eingeht. Dieses wird durch die Oberflächenstruktur des Abreißgewebes und/oder durch zusätzliche Antihaftbeschichtungen (wie z.B. PTFE, Silikon o.ä.) erreicht. Als typische Materialien sind Glasgewebe, Nylongewebe u.ä. anzuführen. Das Abreißgewebe muss gasdurchlässig und ebenso durchlässig für das Matrixmaterial in beiden Richtungen sein.

Die Membran 7 ist eine semipermeable Membran aus z. B. technischem Kunststoffmaterial, welche sich hinsichtlich der temperatur- und Medienbeständigkeit an den Prozessbedingungen orientiert. Weiterhin ist diese Membran durchlässig für Gase, jedoch ist sie für Flüssigkeiten mit Viskositäten vergleichbar Wasser oder höherer Viskosität nicht durchlässig. Dieses Verhalten wird durch in der Membran befindliche gasdurchlässige Poren erreicht, welche mehr oder minder großflächig auf der Membranoberfläche verteilt sind. Die Größe der Poren ist so gewählt, dass das Matrixsystem nicht durchdringen kann. Die Dicke der Membran bewegt sich im Zehntelmillimeter Bereich. Durch die Verwendung von typischen Kunststoffmaterial ist eine ausreichende Flexibilität zum Drapieren und Formen vorhanden.

Das Lüftergewebe 32 oberhalb der Fließhilfe 15 hat die Funktion die durch die Membran abgesaugte Luft und andere flüchtige Bestandteile zur Absaugung an die Vakuumpumpe 29 zu leiten. Dieses Material kann aus einem beliebigen Werkstoff sein, sofern dieser ausreichend temperatur-, medienbeständig gegenüber den im Prozess notwendigen Werkstoffen ist und eine Luftleitung in Längsrichtung möglich ist. Eingesetzt werden hierfür flauschige Matten, Gewebe, Gewirke, Geflechte u.a., welche aus Metall, Kunststoff u.a. Werkstoffen sein kann.

Die erfindungsgemäßen Vorrichtungen können für nahezu beliebige Formen von Bauteilen verwendet werden. Z.B. können die verwendeten Halbzeuge Hutprofile mit oder ohne Schaumkem 35 oder einen mit beliebigen anderen Werkstoffen gebildeten Kern mit geschlossener Oberfläche aufweisen. Insbesondere kommen Halbzeuge bzw. Bauteile in Sandwich- oder Wabe- oder Honey Comb-Formen in Betracht.

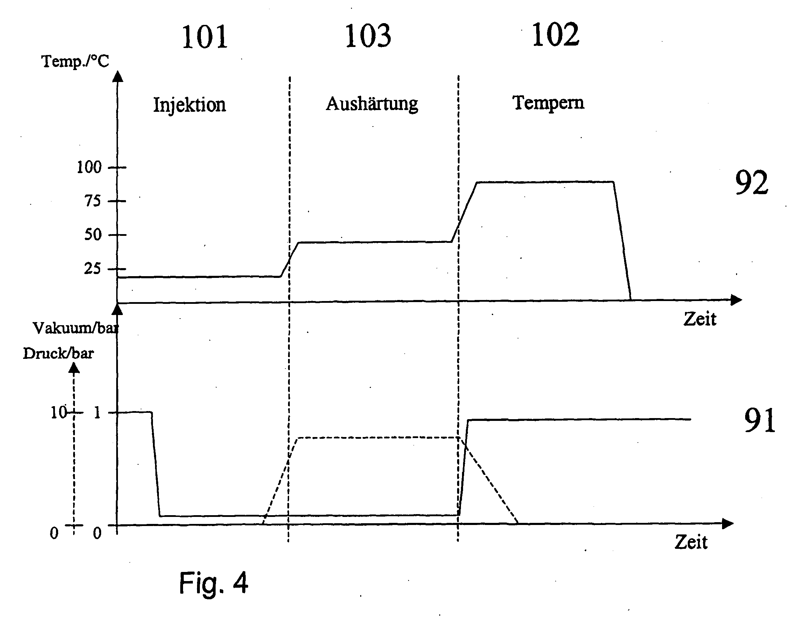

In der Figur 4 sind beispielhaft typische Verläufe für das im ersten Raum 10 herrschende Vakuum 91 und Temperatur 92 dargestellt. Weiterhin zeigt die Figur 4 beispielhaft den Verlauf des Druckes 93 für den in einer weiteren Ausführungsform der Erfindung verwendeten Autoklaven.

Im einzelnen gliedert sich der Temperatur- und Vakuum-Verlauf in zumindest zwei Phasen, die Injektionsphase 101 und die Härtungsphase 103. Nach diesen Phasen kann noch eine Temperphase 102 vorgesehen sein. In der Injektionsphase 101 ist die Temperatur geringer als in der Härtungsphase 103.

Der Temperaturverlauf und die Vakuumsteuerung sind derart vorgesehen, dass bei dem ausgehärteten Bauteil eine optimale Qualität, geringe bis keine Poren und ein geeigneter Faservolumenanteil erreicht wird. Die Vorgaben für die Temperatur ergeben sich aus den Material-Anforderungen des Matrixwerkstoffes. Das Vakuum kann hierbei unabhängig vom gewählten Matrixwerkstoff während des gesamten Prozesses bis zur Aushärtung, also dem Zustand in dem der Matrixwerkstoff seinen Aggregatzustand von flüssig in irreversibel fest geändert hat, auf gleichbleibendem Niveau gehalten werden. Übliche Werte und Toleranzen, die hierbei einzuhalten sind, sind z.B. 1 bis 10 mbar (Absolutdruck, nahe dem idealen Vakuum). Nach der Aushärtung 103 ist kein Vakuum mehr erforderlich. Die notwendigen Temperaturverläufe sind wie folgt charakterisiert: Während der Injektionsphase 101 bei vollem Vakuum ist eine Temperatur erforderlich, welche bestimmt wird durch die Viskositätskurve des Matrixwerkstoffes. Die Temperatur wird so gewählt, dass der Matrixwerkstoff ausreichend flüssig wird, um mittels Vakuumsaugen durch die Zuleitung 33 in den Innenraum 25 zugelangen. Dieses ist die Mindesttemperatur, welche für den Prozess notwendig ist. Gleichzeitig darf diese Temperatur nicht so hoch gewählt werden, dass eine Aushärtung (Verlust von Viskosität, fester Zustand der Matrix) erreicht wird. Daher wird die Prozesstemperatur so eingestellt (je nach gewähltem Matrixwerkstoff), dass eine Injektion möglich ist (geringe Viskosität) und die verbleibende Zeit bis zur Aushärtung für die Injektion, also das nahezu vollständige Füllen des Innenraumes 25 mit Matrixwerkstoff ausreichend ist (Fachbegriff z.B. Gel-Time). Typische notwendige Viskositäten während der Injektionsphase sind hierbei z.B. Bereiche von 1 bis 1000 mPas. Typische Temperaturen bei einem 350°F(180°C) System sind z.B. 70 bis 120°C für die Injektionsphase 101, ca. 100 bis 180°C für die Aushärtungsphase 103 und für die Temperphase 102 Werte von ca. 160 bis 210 °C.

Für ausgewählte Matrixwerkstoffe z.B. RT - Matrixwerkstoffe ist die Variante Injektionstemperatur 101 identisch Härtungstemperatur 103 identisch Tempertemperatur 102 vorteilhaft.

Das Vakuum wird vor der Injektionsphase 101 (Fig. 4) oder vor derselben gebildet. Bei dem erfindungsgemäßen Verfahren wird für die Injektion ein Vakuum von typischerweise 1 bis 10 mbar erzeugt, das sich bis zum Ende der Aushärtungsphase erstreckt und nicht reduziert werden sollte.

Die verschiedenen Ausführungsformen der erfindungsgemäßen Verfahren können noch ergänzt werden durch einen Autoklaven, mit dem während oder nach der Injektionsphase in gesteuerter oder geregelter Weise der erste Raum 10 zeitabhängig mit Vakuum, Druck und Temperatur beaufschlagt wird. Dadurch kann der Faser-Volumen-Anteil des herzustellenden Bauteils erhöht, im Halbzeug verbleibende Restluft entfernt und die Formgebung des herzustellenden Bauteils verbessert werden.

Im folgenden wird das erfindungsgemäße Verfahren beschrieben:

In ein beliebiges Aushärtewerkzeug werden trockene Materialien (z.B. CFK Gelege, Gewebe etc.) gemäß konstruktiven Vorgaben positioniert und somit ein Laminataufbau aus den Halbzeug-Einzelschichten gebildet. Das Werkzeug ist eingetrennt, d.h. mittels Trennmittel oder Trennfolie und Abreißgewebe (Zusammen bildet es den Aufbau 5 an der Bauteilunterseite von 1.) vorbehandelt, um ein Verkleben des Matrixwerkstoffes mit dem Werkzeug zu verhindern und ein wieder entfernen des Bauteiles (Entformen) von der Werkzeugoberfläche zu ermöglichen. Das trockene Material des Bauteiles 1 ist vorzugsweise mit dem Abreißgewebe 13 versehen. Zusätzlich kann eine sogenannte Fließhilfe 15, 15a auf der dem Werkzeug zugewandeten Seite 11 a oder / und der dem ersten Raum 10 zugewandten Seite 11 b des Halbzeugs durch einfaches Auflegen aufgebracht werden. Auf zumindest einer Seite des Halbzeugs kann mit oder ohne Verwendung einer Fließhilfe auch eine weitere Schicht 40a, 40b zur Verbesserung der Bauteil-Eigenschaften vorgesehen sein. Auf diese Schichten 40a, 40b bzw. Fließhilfe 15 wird die nur für Luft, aber nicht für Flüssigkeiten durchlässige Membran 7 aufgelegt und mittels der Dichtung 21 abgedichtet. Anschließend wird das Lüftergewebe 32 über die Membran 7 gelegt und mittels der Folie 19 und der Dichtung 21 zur Umgebung abgedichtet. Die Matrixzuführungs-Leitung 33 und die Vakuumleitung 29 werden während dieses Vorganges mit handelsübliche Durchführungen und Dichtungen gemäß Fig. 1 eingebracht. Gegebenenfalls wird das Druckerzeugungs-Mittel 50 angeschlossen.

Nach der Aufbringung der genannten Materialien und der Folie oder Vakuumfolie 19 wird der erste Raum 10 mittels der Vakuumpumpe evakuiert. Gleichzeitig wird ein Matrixmaterial -Vorratsbehälter an das System angeschlossen, um Matrix-Material in den ersten Raum 10 einzuleiten. Durch das Vakuum entsteht ein Druckgefälle, welches das Matrix-Material aus dem Vorratsbehälter in den evakuierten ersten Raum 25 saugt. Das Matrix-Material wird nunmehr mehr oder minder ungehindert und nahezu unabhängig von seiner Viskositäts-Charakteristik gegebenenfalls durch die Fließhilfe 15 und die Zuleitung 33 auf der Bauteiloberfläche verteilt. Gegebenenfalls wird das Einströmen des Matrix-Materials durch das Druckerzeugungs-Mittel beeinflusst. Vorhandene Luft wird hierbei durch das permante Absaugen des Innenraumes 27 durch die Membrane 7 entsorgt. Ein Fließen des Matrix-Materials innerhalb des Laminat-Aufbaus, welcher durch einen großen Fließwiderstand gekennzeichnet ist, erfolgt hierbei nicht. Vielmehr erfolgt die Infiltration von Matrix-Material von der Bauteiloberfläche senkrecht nach unten in das Laminat. Der maximale Fließweg an jeder Stelle des Bauteiles ist somit direkt eine Funktion der Bauteildicke an diesem Punkt. Der Fließwiderstand ist somit sehr gering und folglich können auch Harzsysteme eingesetzt werden, welche auf Grund Ihrer Viskosität in der Vergangenheit nicht infiltrationsfähig waren und Bauteile mit großen Abmessungen erzeugt.

Zur Vermeidung von lokalen Luftpolstern dient die Membran 7. Erfolgt z.B. ein Schließen der sich bildenden Fließfronten und somit das Entstehen eines geschlossenen Luftposters im Bauteil 1 des Innenraumes 25 ohne Anbindung an den Vakuumabfluss der Luft, kann kein Harz in diese Luftposter einfließen. Es würde eine Fehlstelle entstehen (keine Durchtränkung). Die luftdurchlässige Membran 7 verhindert diesen Effekt, da an jeder Stelle des Bauteiles Luft immer senkrecht zur Oberfläche durch die Membran in einen belüftbaren harzfreien Raum des Vakuumaufbaues 27 gelangen kann und dort oberhalb der Membran 7 durch den Vakuumanschluss 29 mit Hilfe des Lüftergewebe 32 abgesaugt wird. Die Membran ist für das Harz nicht durchlässig. Somit ist eine Überwachung der Fließfronten nicht erforderlich, da sich der Prozess der Durchtränkung selbst regelt. Der Grad der Durchtränkung ist eine direkte Funktion der eingebrachten Harzmenge, welche dem Prozess zur Verfügung gestellt wird, sowie der eingebrachten Fasermenge.

Sobald die vollständige Durchtränkung abgeschlossen ist, wird unter Beibehaltung des gleichen Vakuums die Aushärtung durch eine geeignete Temperatur durchgeführt. Die hierbei durch den chemischen Prozess entstehenden Blasen (Matrixsieden, flüchtige Bestandteile etc.) würden bei den bekannten Prozessen zur Porenbildung im fertigen Bauteil führen. Durch die Membran 7 wird dieses jetzt verhindert, da eine permante Entlüftung senkrecht zur Oberfläche des Bauteiles durch die Membran erfolgt.

Nach erfolgter Aushärtung kann das Bauteil entformt werden. Dies bedeutet, dass alle Verfahrens-Hilfsstoffe vom Bauteil 1 wieder z.B. durch abziehen von Hand entfernt werden und das Bauteil von dem Werkzeug 3 entfernt werden kann. Dieses nun entformte harte Bauteil mit aus den mit Matrix durchtränkten Halbzeugen kann je nach Anforderungsprofil einer reinen thermischen Nachbehandlung (Tempern im Schritt 102) unterzogen werden. Das Tempern kann auch vor dem Entformen erfolgen, muss aber zur Reduzierung der Werkzeug-Belegungszeiten nicht durchgeführt werden.

Die Größe der nach dem erfindungsgemäßen Verfahren herstellbaren Bauteile ist zur oberen Grenze hin nahezu unbegrenzt. Die natürliche obere Grenze ist eher in der technischen Handhabbarkeit des Bauteiles ( Transport etc. ) als in dem Verfahren zu suchen. Eine Mindestgröße für diese Bauteile gibt es nicht. Die maximal realisierbare Dicke richtet sich nach den verwendeten Harztypen und der zur Verfügung stehenden Injektionszeit. Diese Injektionszeit wird durch wirtschaftliche nicht durch technische Grenzen bestimmt. Andere unerwünschte Nebeneffekte wie z.B. eine exotherme Reaktion während der Aushärtung sind nur abhängig vom Harzsystem und nicht vom Verfahren.

Zusammengefasst handelt es sich erfindungsgemäß um ein Verfahren zur Herstellung von faserverstärkten Kunststoff-Bauteilen aus trockenen Faserverbund-Halbzeugen mittels eines Injektionsverfahrens zur Injektion von Matrix-Material , bei dem ein Absaugen von Luft aus dem zweiten Raum 27 erfolgt, wodurch sich ein Druckgefälle von dem ersten Raum 10 zu dem zweiten Raum 27 ergibt und Matrix-Material aus dem Vorratsbehälter in den evakuierten ersten Raum 10 gesaugt wird, das wegen der Fließhilfe 15 über der der Membran 7 zugewandten Oberfläche 11 des Halbzeugs 1 verteilt und senkrecht in das Halbzeug 1 eindringt. Die Verknüpfung der Funktionen Verteilung des Matrix-Materiales oberhalb der Bauteiloberfläche durch die Fließhilfe und der flächigen Entlüftungsmöglichkeit oberhalb des Bauteiles und der Fließhilfe durch die Membranfolie erzielt den gewünschten Qualitätserfolg bei einer überdrucklosen Aushärtung unter Vakuum.

## Patentansprüche

1. Verfahren zur Herstellung von faserverstärkten Kunststoff-Bauteilen aus trockenen Faserverbund-Halbzeugen mittels eines Injektionsverfahrens zur Injektion von Matrix-Material mit den Schritten:
- Anordnen des Faserverbund-Halbzeugs (1) auf einem Werkzeug (3),
- Bildung eines ersten Raums (10) mittels einer gas-durchlässigen und Matrixmaterial-undurchlässigen Membran (7) zumindest einseitig um das Halbzeug (1) herum, wobei in den ersten Raum (10) Matrix-Material einführbar ist,
- Bildung eines am ersten Raum (10) anliegenden zweiten Raums (27), der von der Umgebung mittels einer Gas- und Matrixmaterial-undurchlässigen, gegenüber dem Werkzeug (3) abgedichteten Folie (19) abgegrenzt ist,
- Absaugen von Luft aus dem zweiten Raum (27), wodurch Matrix-Material aus einem Vorratsbehälter in den evakuierten ersten Raum (10) gesaugt wird und eine Fliesshilfe (15, 15a) eine Verteilung des Matrixmaterials über der dieser zugewandten Oberfläche (11b) des Halbzeugs (1) und ein Eindringen desselben senkrecht in das Halbzeug (1) bewirkt,
**dadurch gekennzeichnet,**
**dass** während der Einführung des Matrix-Materials der Druck des einfließenden Matrix-Materials durch Erhöhung des Drucks in der Zuleitung (33) für das Matrixmaterial unter Verwendung eines Drucksteuerungs-Mittels zumindest zeitweise erhöht wird.

2. Verfahren zur Herstellung von faserverstärkten Kunststoff-Bauteilen aus trockenen Faserverbund-Halbzeugen mittels eines Injektionsverfahrens nach dem Anspruch 1, **dadurch gekennzeichnet, dass** die Steuerung des Druckes des Matrix-Materials aufgrund der Viskosität des Matrix-Materials, einer Temperatur und/oder des Druckes im ersten Raum (10) erfolgt.

3. Verfahren zur Herstellung von faserverstärkten Kunststoff-Bauteilen aus trockenen Faserverbund-Halbzeugen mittels eines Injektionsverfahrens nach Anspruch 2, **dadurch gekennzeichnet, dass** die Temperatur die Temperatur des einfließenden Matrix-Materials oder die Temperatur im ersten Raum (10) ist.

4. Verfahren zur Herstellung von faserverstärkten Kunststoff-Bauteilen aus trockenen Faserverbund-Halbzeugen mittels eines Injektionsverfahrens zur Injektion von Matrix-Material mit den Schritten:
- Anordnen des Faserverbund-Halbzeugs (1) auf einem Werkzeug (3),
- Bildung eines ersten Raums (10) mittels einer gas-durchlässigen und Matrixmaterial-undurchlässigen Membran (7) zumindest einseitig um das Halbzeug (1) herum, wobei in den ersten Raum (10) Matrix-Material einführbar ist,
- Bildung eines am ersten Raum (10) anliegenden zweiten Raums (27), der von der Umgebung mittels einer Gas- und Matrixmaterial-undurchlässigen, gegenüber dem Werkzeug (3) abgedichteten Folie (19) abgegrenzt ist,
- Absaugen von Luft aus dem zweiten Raum (27), wodurch Matrix-Material aus dem Vorratsbehälter in den evakuierten ersten Raum (10) gesaugt wird und eine Fliesshilfe (15) eine Verteilung des Matrixmaterials über der dieser zugewandten Oberfläche (11b) des Halbzeugs (1) und ein Eindringen desselben senkrecht in das Halbzeug (1) bewirkt,
**dadurch gekennzeichnet, dass** nach der Einführung des Matrix-Materials mittels einer Leitung (33) unter Verwendung eines Drucksteuerungs-Mittels zumindest zeitweise ein Unterdruck in der Leitung (33) oder im Vorratsbehälter für das Matrix-Material eingestellt wird.

5. Vorrichtung zur Herstellung von faserverstärkten Kunststoff-Bauteilen aus trockenen Faserverbund-Halbzeugen mittels eines Injektionsverfahrens zur Injektion von Matrix-Material mit einem Werkzeug (3) zum Anordnen des Faserverbund-Halbzeugs (1), einer gas-durchlässigen und Matrixmaterialundurchlässigen Membran (7), die zumindest einseitig um das Halbzeug (1) herum angeordnet ist und einen ersten Raum (10) bildet, in den Matrix-Material mittels einer Leitung (33) einführbar ist, einem am ersten Raum (10) anliegenden zweiten, gegenüber dem Werkzeug (3) abgedichteten Raum (27), der von der Umgebung mittels einer Gas- und Matrixmaterial-undurchlässigen Folie (19) abgegrenzt ist, wobei bei Absaugen von Luft aus dem zweiten Raum (27) Matrix-Material aus dem Vorratsbehälter in den evakuierten ersten Raum (10) gesaugt und ein Eindringen desselben senkrecht in das Halbzeug (1) bewirkt wird,
**dadurch gekennzeichnet, dass** ein Drucksteuerungs-Mittel (50) vorgesehen ist, das mit der Leitung (33) in Verbindung steht, um den Druck in der Leitung (33) zu beeinflussen.

6. Verfahren nach einem der Ansprüche 1 bis 4, **dadurch gekennzeichnet, dass** auf an einer ersten, der dem Werkzeug (3) zugewandten Oberfläche (11a,11b) des Halbzeugs (1) die Fliesshilfe (15a) angeordnet ist, um eine Verteilung des Matrix-Materials über diese Oberflächen (11a) und ein Eindringen desselben in das Halbzeug (1) zu bewirken.

7. Verfahren zur Herstellung von faserverstärkten Kunststoff-Bauteilen aus trockenen Faserverbund-Halbzeugen nach dem Anspruch 6, **dadurch gekennzeichnet, dass** eine weitere Fliesshilfe (15) auf einer weiteren, der ersten Oberfläche gegenüberliegenden Oberfläche (11 b) des Halbzeugs (1) angeordnet ist.

8. Vorrichtung nach Anspruch 5, **dadurch gekennzeichnet, dass** auf an der dem Werkzeug (3) zugewandten Oberfläche (11a,11b) des Halbzeugs (1) eine Fliesshilfe (15a) angeordnet ist, um eine Verteilung des Matrix-Materials über diese Oberflächen (11a) und ein Eindringen desselben in das Halbzeug (1) zu bewirken.

9. Verfahren nach einem der Ansprüche 1 bis 4 oder 6 bis 7, **dadurch gekennzeichnet, dass** zumindest auf einer Oberfläche (11 a, 11 b) des Halbzeugs (1) eine metallische oder keramische Schicht (40a,40b) aufgebracht wird und durch das Absaugen von Luft aus dem zweiten Raum (27) eine Durchdringung des Matrix-Materials durch die Schicht (40a,40b) und ein Eindringen desselben senkrecht in das Halbzeug (1) zur Verbindung mit dem Halbzeug (1) erfolgt.

10. Vorrichtung nach einem der Ansprüche 5 oder 8, **dadurch gekennzeichnet, dass** zumindest auf einer Oberfläche (11a, 11b) des Halbzeugs (1) eine metallische oder keramische Schicht (40a, 40b) aufgebracht wird und durch das Absaugen von Luft aus dem zweiten Raum (27) eine Durchdringung des Matrix-Materials durch die Schicht (40a,40b) und ein Eindringen desselben senkrecht in das Halbzeug (1) zur Verbindung mit dem Halbzeug (1) erfolgt.

11. Verfahren nach einem der Ansprüche 1 bis 4 oder 6 bis 7 oder 9, **dadurch gekennzeichnet, dass** mittels eines Autoklaven der erste Raum (10) zeitabhängig mit Vakuum, Druck und Temperatur beaufschlagt wird, um das Halbzeug (1) auszuhärten.

## Claims

1. A method for the production of fibre-reinforced plastic components from dry fibre-composite semi-finished products by means of an injection method for injecting matrix material, comprising the steps:
- arranging the fibre-composite semi-finished product (1) on a tool (3),
- formation of a first chamber (10) by means of a gas-permeable membrane (7), which is impermeable to matrix material, around the semi-finished product (1) at least on one side, wherein matrix material can be introduced into the first chamber (10),
- formation of a second chamber (27) adjacent to the first chamber (10), which second chamber is delimited from the environment by means of a film (19), which is impermeable to gas and matrix material and is sealed against the tool (3),
- evacuation of air from the second chamber (27), whereby matrix material is sucked from a storage reservoir into the evacuated first chamber (10) and a flow promoter (15, 15a) causes distribution of the matrix material over the surface (11b) of the semi-finished product (1) facing this promoter and penetration of the material perpendicularly into the semi-finished product (1),
**characterized in that**
during the introduction of the matrix material the pressure of the influent matrix material is increased at least temporarily by increasing the pressure in the feed line (33) for the matrix material using a pressure control means.

2. A method for the production of fibre-reinforced plastic components from dry fibre-composite semi-finished products by means of an injection method according to claim 1, **characterized in that** control of the pressure of the matrix material is achieved on the basis of the viscosity of the matrix material, a temperature and/or the pressure in the first chamber (10).

3. A method for the production of fibre-reinforced plastic components from dry fibre-composite semi-finished products by means of an injection method according to claim 2, **characterized in that** the temperature is the temperature of the influent matrix material or the temperature in the first chamber (10).

4. A method for the production of fibre-reinforced plastic components from dry fibre-composite semi-finished products by means of an injection method for injecting matrix material, comprising the steps:
- arranging the fibre-composite semi-finished product (1) on a tool (3),
- formation of a first chamber (10) by means of a gas-permeable membrane (7), which is impermeable to matrix material, around the semi-finished product (1) at least on one side, wherein matrix material can be introduced into the first chamber (10),
- formation of a second chamber (27) adjacent to the first chamber (10), which second chamber is delimited from the environment by means of a film (19) which is impermeable to gas and matrix material and is sealed against the tool (3),
- evacuation of air from the second chamber (27), whereby matrix material is sucked from the storage reservoir into the evacuated first chamber (10) and a flow promoter (15) causes distribution of the matrix material over the surface (11b) of the semi-finished product (1) facing this promoter and penetration of the material perpendicularly into the semi-finished product (1),
- **characterized in that**, following the introduction of the matrix material by means of a line (33), a vacuum is set in the line (33) or in the storage reservoir for the matrix material at least temporarily using a pressure control means.

5. A device for the production of fibre-reinforced plastic components from dry fibre-composite semi-finished products by means of an injection method for injecting matrix material, with a tool (3) for placing the fibre-composite semi-finished product (1), a gas permeable membrane (7), which is impermeable to matrix material and is arranged around the semi-finished product (1) at least on one side and forms a first chamber (10), into which matrix material can be introduced by means of a line (33), a second chamber (27) adjacent to the first chamber (10) and sealed against the tool (3), which second chamber is delimited from the environment by means of a film (19), which is impermeable to gas and matrix material, wherein on the evacuation of air from the second chamber (27) matrix material is sucked from the storage reservoir into the evacuated first chamber (10) and is caused to penetrate perpendicularly into the semi-finished product (1),
**characterized in that** a pressure control means (50) is provided, which is connected to the line (33), in order to influence the pressure in the line (33).

6. A method according to one of claims 1 to 4, **characterized in that** the flow promoter (15a) is arranged on a first surface (11a, 11b) of the semi-finished product (1) facing the tool (3), in order to cause distribution of the matrix material over these surfaces (11a) and penetration of the material into the semi-finished product (1).

7. A method for the production of fibre-reinforced plastic components from dry fibre-composite semi-finished products according to claim 6, **characterized in that** a further flow promoter (15) is arranged on a further surface (11b) of the semi-finished product (1) opposing the first surface.

8. Device according to claim 5, **characterized in that** a flow promoter (15a) is arranged on the surface (11a, 11b) of the semi-finished product (1) facing the tool (3) to cause distribution of the matrix material over these surfaces (11a) and penetration of the material into the semi-finished product (1).

9. A method according to one of claims 1 to 4 or 6 to 7, **characterized in that** a metal or ceramic layer (40a, 40b) is applied at least to one surface (11a, 11b) of the semi-finished product (1) and as a result of the evacuation of air from the second chamber (27) a penetration of the matrix material through the layer (40a, 40b) and a penetration of the material perpendicularly into the semi-finished product (1) takes place for connection with the semi-finished product (1).

10. A device according to one of claims 5 to 8, **characterized in that** a metal or ceramic layer (40a, 40b) is applied at least to one surface (11a, 11b) of the semi-finished product (1) and as a result of the evacuation of air from the second chamber (27) a penetration of the matrix material through the layer (40a, 40b) and a penetration of the material perpendicularly into the semi-finished product (1) takes place for connection with the semi-finished product (1).

11. A method according to one of claims 1 to 4 or 6 to 7 or 9, **characterized in that** the first chamber (10) is acted upon by means of an autoclave in a time-dependent manner by vacuum, pressure and temperature in order to cure the semi-finished product (1).

## Revendications

1. Procédé de fabrication d'éléments plastiques renforcés par des fibres en semi-produits secs renforcés par des fibres, à l'aide d'un procédé par injection pour l'injection d'une matrice avec les étapes suivantes :
- Mise en place du semi-produit renforcé par des fibres (1) sur un outil (3)
- Formation d'un premier compartiment (10) à l'aide d'une membrane (7) perméable au gaz et étanche au matériau matriciel, du moins autour d'un côté du semi-produit (1), où un matériau matriciel peut être introduit dans le premier compartiment (10),
- Formation d'un second compartiment (27) contigu au premier compartiment (10), qui est coupé de son environnement à l'aide d'une feuille (19) étanche au gaz et au matériau matriciel, bouchée par rapport à l'outil (3),
- Aspiration de l'air contenu dans le second compartiment (27), ce par quoi du matériau matriciel est aspiré d'un réservoir vers le premier compartiment (10) évacué et une aide d'écoulement (15, 15a) provoque une dispersion du matériau matriciel sur la surface (11b) du semi-produit (1) orientée vers celle-ci et une pénétration verticale de celui-ci dans le semi-produit (1),
**caractérisé en ce que**
pendant l'introduction du matériau matriciel, la pression du matériau matriciel entrant est augmentée, du moins temporairement, par l'augmentation de la pression dans l'admission (33) pour le matériau matriciel en utilisant un moyen de commande de pression,

2. Procédé de fabrication d'éléments plastiques renforcés par des fibres en semi-produits secs renforcés par des fibres à l'aide d'un procédé par injection selon la revendication 1, **caractérisé en ce que** la commande de la pression du matériau matriciel résulte de la viscosité du matériau matriciel, d'une température et/ou de la pression dans le premier compartiment (10).

3. Procédé de fabrication d'éléments plastiques renforcés par des fibres en semi-produits secs renforcés par des fibres à l'aide d'un procédé par injection selon la revendication 2, **caractérisé en ce que** la température est la température du matériau matriciel ou la température dans le premier compartiment (10).

4. Procédé de fabrication d'éléments plastiques renforcés par des fibres en semi-produits secs renforcés par des fibres à l'aide d'un procédé par injection pour l'injection de matériau matriciel avec les étapes suivantes :
- Disposition du semi-produit renforcé par des fibres (1) sur un outil (3)
- Formation d'un premier compartiment (10) au moyen d'une membrane (7) perméable au gaz et étanche au semi-produit, autour d'au moins un côté du semi-produit (1), où du matériau matriciel peut être introduit dans le premier compartiment (10),
- Formation d'un second compartiment (27) contigu au premier compartiment (10), qui est coupé de son environnement à l'aide d'une feuille (19) étanche au gaz et au matériau matriciel, bouchée par rapport à l'outil (3),
- Aspiration de l'air contenu dans le second compartiment (27), ce par quoi du matériau matriciel est aspiré du réservoir vers le premier compartiment (10) évacué et une aide d'écoulement (15) provoque une dispersion du matériau matriciel sur la surface (11b) du semi-produit (1) orientée vers celle-ci et une pénétration verticale de celui-ci dans le semi-produit (1),
**caractérisé en ce qu'**après l'introduction du matériau matriciel au moyen d'un conduit (33) par l'utilisation d'un moyen de commande de pression, du moins temporairement, une sous-pression est réglée dans le conduit (33) ou dans le réservoir de matériau matriciel.

5. Procédé de fabrication d'éléments plastiques renforcés par des fibres en semi-produits secs renforcés par des fibres à l'aide d'un procédé par injection pour l'injection de matériau matriciel avec un outil (3) pour la disposition de semi-produit renforcé par des fibres (1), avec une membrane (7) perméable au gaz et étanche au matériau matriciel, qui est disposée autour d'au moins un côté du semi-produit (1) et forme un premier compartiment (10), dans lequel du matériau matriciel peut être introduit par un conduit (33), avec un second compartiment (27) contigu au premier compartiment (10), bouché par rapport à l'outil (3), qui est coupé de son environnement par une feuille (19) étanche au gaz et au matériau matriciel, où, du fait de l'aspiration de l'air contenu dans le second compartiment (27), du matériau matriciel est aspiré du réservoir vers le premier compartiment (10) évacué et pénètre verticalement dans le semi-produit (1),
**caractérisé en ce qu'**un moyen de commande de pression (50) est prévu, qui est relié au conduit (33), afin d'influencer la pression dans le conduit (33).

6. Procédé selon l'une des revendications 1 à 4, **caractérisé en ce que** l'aide d'écoulement (15a) est placée sur une première surface (11a, 11b) du semi-produit (1), orientée vers l'outil (3), pour provoquer une dispersion du matériau matriciel sur cette surface (11a) et une pénétration de ce dernier dans le semi-produit (1).

7. Procédé de fabrication d'éléments plastiques renforcés par des fibres, en semi-produits renforcés par des fibres selon la revendication 6, **caractérisé en que** une autre aide d'écoulement (15) est placée sur une autre surface (11b) du semi-produit (1), opposée à la première surface.

8. Dispositif selon la revendication 5, **caractérisée en ce qu'**une aide d'écoulement (15a) est placée sur une surface (11a, 11b) du semi-produit (1), orientée vers l'outil (3), afin de provoquer une dispersion du matériau matriciel sur cette surface (11a) et une pénétration de ce dernier dans le semi-produit (1).

9. Procédé selon l'une des revendications 1 à 4 ou 6 à 7, **caractérisé en ce que**, du moins sur une surface (11a, 11b) du semi-produit (1), une couche (40a, 40b) métallique ou céramique est appliquée et à travers l'aspiration de l'air hors du second compartiment (27), le matériau matriciel pénètre à travers la couche (40a, 40b) et ce dernier pénètre verticalement dans le semi-produit (1) pour la liaison avec le semi-produit (1).

10. Dispositif selon l'une des revendications 5 ou 8, **caractérisé en ce que**, au moins sur une surface (11a, 11b) du semi-produit (1), une couche (40a, 40b) métallique ou céramique est appliquée et à travers l'aspiration de l'air hors du second compartiment (27), le matériau matriciel pénètre à travers la couche (40a, 40b) et ce dernier pénètre verticalement dans le semi-produit (1) pour la liaison avec le semi-produit (1).

11. Procédé selon l'une des revendications 1 à 4 ou 6 à 7 ou 9, **caractérisé en ce que** au moyen d'un autoclave, le premier compartiment (10) est alimenté en fonction du temps avec un vacuum, de la pression et de la température, afin de durcir le semi-produit (1).
